# FASCICULE DE BREVET EUROPEEN

(11) **EP 3 237 719 B1**
(45) Date de publication et mention de la délivrance du brevet: **15.09.2021**
(21) Numéro de dépôt: 15823357.7
(22) Date de dépôt: 18.12.2015
(51) Int. Cl.: E21B 17/00, B65D 59/06, F16L 57/00

(54) **PROTECTEUR DE CONNEXION D'UN COMPOSANT TUBULAIRE À JOINT SOUPLE**
SCHUTZ FÜR DEN VERBINDER EINER ROHRFÖRMIGEN KOMPONENTE MIT FLEXIBLER VERBINDUNG
PROTECTOR FOR THE CONNECTOR OF A TUBULAR FLEXIBLE-JOINT COMPONENT

(30) Priorité: 22.12.2014 FR 1463080
(43) Date de publication de la demande: 01.11.2017
(73) Titulaire: Vallourec Oil and Gas France, 59620 Aulnoye-Aymeries (FR)
(72) Inventeur: AGUILAR MENDEZ, José Antonio, Veracruz 94240 (MX); MAGALLANES MONTALVO, Gerardo Manuel, Veracruz 91779 (MX); BOUSBAINE, Karim, 25490 Badevel (FR)
(74) Mandataire: Cabinet Netter
(86) Numéro de dépôt international: PCT/FR2015/053631
(87) Numéro de publication internationale: WO 2016/102846

(56) Documents cités:
- US-A- 4 157 100
- US-A- 4 429 719
- US-A- 4 719 687
- None

## Description

L'invention concerne les composants filetés tubulaires et plus précisément les protecteurs de l'extrémité de certains de ces composants, notamment les tubes de forage ou d'exploitation de puits de pétrole ou gaz.

On entend ici par "composant" tout élément ou accessoire utilisé pour forer ou exploiter un puits et comprenant au moins une connexion ou connecteur ou encore extrémité filetée, et destiné à être assemblé par un filetage à un autre composant pour constituer avec cet autre composant un joint fileté tubulaire. Le composant peut être par exemple un élément tubulaire de relativement grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « crossover », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connexions filetées à épaulement pour tiges de forage rotatif.

Les fabricants de composants de joints filetés tubulaires ont également développé des joints filetés dits supérieurs (« premium ») qui présentent des géométries spécifiques des filetages, et des moyens spécifiques leur procurant de meilleures performances en service, notamment en matière de résistance mécanique et d'étanchéité.

Les connexions filetées comprennent le plus souvent un ou deux filetages dont les filets sont sensiblement trapézoïdaux et comprennent un flanc d'engagement du côté des filets dirigés vers l'extrémité libre de l'élément fileté considéré, un flanc porteur du côté opposé des filets d'engagement, un sommet de filet de largeur non nulle et un fond de filet de largeur également non nulle, les flancs porteurs et les flancs d'engagement étant d'orientation sensiblement perpendiculaire à l'axe de l'élément fileté (Par exemple, le filet API Buttress présente selon la norme API une inclinaison de +3° pour les flancs porteurs, et une inclinaison de +10° pour les flancs d'engagement).

Il existe également des filets triangulaires ou ronds présentant également des flancs d'engagement et des flancs porteurs dont les sommets et fonds de filets sont de largeur sensiblement nulle, mais qui sont aujourd'hui très peu utilisés car ils présentent un fort risque de désengrènement (« jump-out »).

Les composants précités peuvent comporter une extrémité mâle filetée qui est destinée à être vissée à une extrémité femelle filetée d'un autre composant de forage ou d'exploitation. Il est donc indispensable que leurs extrémités mâle et femelles soient le moins possible endommagées, polluées et détériorées entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Par ailleurs, les extrémités des composants précités étaient généralement enduites juste avant leur assemblage d'une graisse à propriété anti-grippante.

Il est de plus en plus courant de remplacer cette graisse par une combinaison de traitements de surface et de revêtements apposés en fines couches sur les connexions, c'est-à-dire sur le filetage, sur la portée, sur la butée.

Par exemple, il a été proposé, notamment dans US 6,027,145, EP 1211451 et FR 2892174, de remplacer la graisse appliquée au pinceau en final sur l'extrémité du composant, par une fine couche, d'épaisseur prédéterminée appliquée en usine, d'un lubrifiant sec à base de particules de lubrifiants solides.

Ces traitements de surface et revêtements présentent des propriétés de dureté, de lubrification, d'anticorrosion adaptées à la situation de vie de l'assemblage de deux connexions ou à l'état assemblé, et il est nécessaire d'adapter les protecteurs de la connexion hors ces étapes de vie du produit, notamment pendant le stockage, la manutention et le transport, pour préserver la connexion tant d'un enlèvement mécanique que d'une pollution (sable, débris) préjudiciables à l'efficacité du produit.

Les revêtements sont aussi appelés revêtements lubrifiants, et qualifiés de solides ou semi-solides, secs ou semi-secs. Ils présentent des propriétés de viscosité qui s'étendent sur une très large plage, de 500 mPa.s à 25°C à plus de 5000 mPa.s à 25°C, certains sont même qualifiés de « collants », c'est-à-dire qu'après application sur les surfaces de la connexion, ils peuvent adhérer à un objet qui le touche, notamment peuvent migrer sur les doigts d'un opérateur qui effleure la surface revêtue de la connexion. D'autres au contraires sont qualifiés de rigides et présentent une certaine dureté. Ce sont des propriétés recherchées pour faciliter l'assemblage de deux connexions, mais qui posent problème avec les protecteurs de connexions filetées. En effet, ceux-ci devant préserver les connexions des chocs, ils doivent être solidement arrimés à la connexion, et doivent présenter des corps rigides.

Pour obtenir ce(s) protection(s), on place généralement, ainsi que l'exige la spécification API 5CT (au paragraphe 12.2), un protecteur sur les extrémités mâle et femelle des composants de joints filetés tubulaires. De nombreux dispositifs de ce type ont été proposés, notamment dans EP 0148807, US 2006/0042709, WO 2005/075877 et WO 2005/024282, les trois derniers documents visant plus particulièrement les protecteurs pour joints préalablement enduits de lubrifiant en usine. Il a été mis en évidence que certains présentent des risques d'endommagement du dispositif de protection à la mise en place, et une étanchéité à l'air et à l'humidité insuffisante.

Les protecteurs sont des dispositifs dont la fonction principale est de protéger les surfaces fonctionnelles des connexions mâles ou femelles vis-à-vis des chocs mécaniques. Ces surfaces peuvent être un ou plusieurs filetage(s), une ou plusieurs portée(s), une ou plusieurs butée(s). Un protecteur est de forme générale sensiblement cylindrique et comprend généralement un amortisseur de chocs mécaniques appelé parechoc situé à l'extrémité opposée à l'extrémité libre du protecteur, un corps, un moyen d'arrimage. La solution généralement adaptée pour arrimer un protecteur sur une connexion est de le visser sur le filetage de la connexion. Cette solution permet un geste de montage simple associé à un positionnement précis. Le protecteur comporte donc un filetage apte à être vissé sur le filetage de la connexion. Le filetage est le plus souvent de même type et de même pas que celui de la connexion.

Aussi, avec l'apparition des traitements de surface et des revêtements apposés sur les connexions, les protecteurs ont été munis de moyens d'étanchéité pour renforcer l'étanchéité à l'humidité ou à l'air des espaces comprenant les surfaces fonctionnelles d'une connexion. Ces moyens d'étanchéité sont généralement rapportés sur le protecteur, et sont réalisés dans des formes et matériaux leur conférant une souplesse accrue par rapport au corps très rigide du protecteur, afin qu'une partie de leur surface fasse contact avec une surface de la connexion en regard en vue de réaliser un contact étanche.

Cependant, la demanderesse s'est aperçue que les solutions connues ne permettent pas d'établir une étanchéité à l'eau satisfaisante.

Le document US 7,284,770 prévoit un protecteur comportant deux joints montés sur le corps du protecteur ; de matériau différent, en particulier de dureté moindre que celui du corps du protecteur, par exemple en élastomères ; et réalisant étanchéité en deux endroits distincts, une première étanchéité au niveau de l'extrémité distale du composant tubulaire, et une deuxième étanchéité sur une surface latérale du composant tubulaire. Ces deux joints en combinaison avec le corps du protecteur permettent d'obtenir, à l'état monté du protecteur sur une portion de l'extrémité du composant, une zone étanche à l'air ou à l'humidité ou aux poussières. La surface annulaire d'extrémité distale fait contact à l'état vissé à la fois avec un joint annulaire et une portion du corps de protecteur. Cette solution permet à une partie de l'extrémité de composant de venir buter à même le corps du protecteur, d'une rigidité supérieure au matériau du joint, et qui vient limiter la force et le couple exercés sur le joint. La demanderesse a constaté que l'étanchéité au niveau de l'extrémité distale du composant annulaire pouvait être faillible, notamment parce que le joint n'est pas maintenu en position de façon convenable. En effet, il arrive que lors du vissage du protecteur sur une extrémité de composant, le joint annulaire soit déplacé, vrillé et ne puisse plus assurer la fonction d'étanchéité. Le joint peut également être perdu lors de la manipulation du protecteur seul. On peut aussi se référer à US 4 157 100.

La demanderesse a déterminé que la situation pouvait être améliorée en empêchant un déplacement impropre du joint annulaire pendant le vissage du protecteur sur le composant et en améliorant la qualité de l'étanchéité créé au contact entre le joint annulaire et l'extrémité annulaire distale d'une connexion.

Un aspect de l'invention est de permettre la mise en place d'un joint annulaire dans un logement et de réduire les risques que ce joint ne soit délogé en totalité ou en partie, accidentellement pendant une manipulation du protecteur ou bien sous l'effet du couple appliqué par une connexion sur le joint lors du vissage du protecteur sur une connexion.

Aussi, l'invention permet de diminuer le risque de pollution de la connexion par un joint annulaire du protecteur, en évitant que ledit joint ou qu'une partie dudit joint ne reste collé à la connexion après retrait du protecteur. En effet, les composants tubulaires sont stockés pendant une période de temps, protecteur mis en place sur l'extrémité du composant. Il arrive qu'une partie du joint colle à la surface de l'extrémité avec laquelle elle est en contact, pouvant ainsi polluer la surface fonctionnelle de l'extrémité du composant.

Un autre aspect de l'invention est de proposer une solution qui améliore l'étanchéité apportée par un joint annulaire sur une surface annulaire distale en proposant un joint annulaire de largeur plus grande que la largeur de l'extrémité distale. Ainsi, l'extrémité distale du composant est exclusivement en contact avec le joint annulaire. Ceci permet d'améliorer la fiabilité de l'étanchéité créée, et également d'améliorer la robustesse du couple de serrage du protecteur sur la connexion dû au frottement entre l'extrémité distale du composant et le joint annulaire.

Un autre aspect de l'invention est de proposer un moyen d'étanchéité qui est statique dans son logement lors de la mise en place du protecteur sur l'extrémité de composant, en particulier un joint d'étanchéité annulaire dont la rotation dans son logement est empêchée même en fin de vissage du protecteur sur le composant lorsqu'une surface annulaire d'extrémité exerce un couple sur ledit joint d'étanchéité.

Un autre aspect de l'invention est de proposer un logement pour le joint d'extrémité qui prévient une torsion du joint lors de la mise en place du protecteur sur l'extrémité de composant.

L'invention a pour but d'améliorer la situation, notamment en termes de simplicité de mise en oeuvre et de robustesse, tout en obtenant une étanchéité de qualité et la possibilité d'inspection.

La présente invention est un protecteur de connexion filetée de composant tubulaire pour le forage ou l'exploitation de puits d'hydrocarbures munie d'une surface d'extrémité distale, le protecteur comprenant un corps principal, un logement annulaire comprenant un fond, deux parois latérales externe et interne distantes l'une de l'autre et dans lequel est disposé un joint annulaire, chaque paroi latérale comprenant une portion de fond de paroi latérale et une portion extérieure de paroi latérale et une face supérieure , les deux portions extérieures de parois latérales définissant une ouverture de largeur Aᵤ et caractérisé en ce qu'un écartement A entre deux portions de fond de paroi latérale est supérieur à la largeur Aᵤ, de façon à permettre la mise en place d'un premier joint annulaire en matériau élastomère puis la rétention dudit joint annulaire dans le logement annulaire. Le joint annulaire comprend une pluralité d'encoches réparties sur la circonférence dudit joint annulaire et que le logement annulaire comprend une pluralité de décrochements aptes à coopérer avec lesdites encoches de sorte que des parois d'encoche s'appuient sur les parois de décrochements du logement annulaire formant un engrènement du joint annulaire avec le logement annulaire.

Dans un mode de réalisation, la surface d'extrémité distale a une largeur B et que la largeur Aᵤ est supérieure à la largeur B, de telle manière qu'à l'état vissé, la surface annulaire d'extrémité de la connexion est en contact uniquement avec le premier joint annulaire.

Dans un mode de réalisation, le joint annulaire comprend une face interne, une face externe et une face inférieure et au moins une encoche est sur la face interne (37) ou sur la face externe ou sur la face inférieure.

Dans un mode de réalisation, une encoche a un contour en forme de V ou de U.

Dans un mode de réalisation, le joint annulaire comprend une face supérieure sensiblement plane ou conique ou concave ou convexe et a un relief de hauteur inférieure à ¼ d'une hauteur moyenne du joint annulaire.

Dans un mode de réalisation, le protecteur comprend un deuxième dispositif d'étanchéité destiné à faire étanchéité avec une paroi latérale extérieure du composant.

Dans un mode de réalisation, le fond est de forme plane ou une portion de tore enveloppant la face inférieure.

Dans un mode de réalisation, le fond comprend au moins un évidement pour faciliter le retrait d'un joint annulaire et son remplacement par un opérateur.

Dans un mode de réalisation, le joint annulaire est en matière élastomère de dureté comprise entre 30 et 60 shore A.

Selon un autre aspect, l'invention est un composant de joint fileté tubulaire pour le forage ou l'exploitation de puits d'hydrocarbures, comprenant une connexion munie d'au moins un filetage et comprenant une surface annulaire d'extrémité, ledit composant étant équipé d'un protecteur selon l'une quelconque des revendications précédentes vissé sur ledit filetage dudit composant tubulaire.

Dans un mode de réalisation, la surface annulaire d'extrémité est en contact uniquement avec le joint annulaire.

On entend par « connexion mâle » la portion d'un composant munie de surfaces usinées et/ou rectifiées en vue de former un joint avec une portion femelle correspondante et par « corps »la portion d'un composant située au-delà et munie de surfaces venues de laminage. Une connexion mâle a généralement un ou plusieurs filetage(s) situé sur une paroi latérale extérieure et une connexion femelle correspondante a un ou plusieurs filetage(s) correspondants sur une paroi latérale intérieure du composant.

Dans un esprit de simplification, l'invention est représentée ci-après dans des modes de réalisation de protecteur pour connexion mâle. Néanmoins, la présente invention est tout à fait adaptée au protecteur pour connexion femelle et la protection ne saurait être limitée aux seules connections mâles.

D'autres caractéristiques et avantages de l'invention apparaîtront à l'examen de la description détaillée ci-après, et des dessins annexés, sur lesquels :
- La figure 1 illustre de façon schématique, une vue en coupe d'une connexion de composant tubulaire.
- La figure 2 illustre de façon schématique, une vue de détail en coupe d'une connexion de composant tubulaire et d'un protecteur selon un mode de réalisation de l'invention, à l'état assemblé.
- la figure 3 illustre de façon schématique, dans une vue axiale, d'un joint annulaire selon un mode de réalisation de l'invention.
- la figure 4 illustre de façon schématique, une vue partielle en perspective, d'un corps de protecteur selon un mode de réalisation de l'invention.
- La figure 5 illustre de façon schématique, une vue en coupe d'un même mode de réalisation d'un protecteur pour extrémité mâle selon l'invention.

Les dessins annexés pourront non seulement servir à compléter l'invention, mais aussi contribuer à sa définition, le cas échéant. Ils ne sont pas limitatifs quant à la portée de l'invention.

L'invention a pour but d'améliorer la protection de l'extrémité filetée d'un composant tubulaire d'un joint fileté tubulaire (destiné au forage ou à l'exploitation de puits d'hydrocarbures ou similaires) contre les endommagements mécaniques, les pollutions (chimiques et matérielles) et les détériorations (corrosion) entre le moment où il sort de sa chaîne de fabrication et celui où il est utilisé (avec plusieurs montages-démontages possibles du dispositif de protection), mais également entre deux utilisations successives, en minimisant fortement les risques qu'un joint annulaire, apte à créer une étanchéité avec une surface annulaire distale d'un composant tubulaire, soit délogé de son logement lors d'une manipulation du protecteur ou lors de l'assemblage du protecteur sur le composant tubulaire.

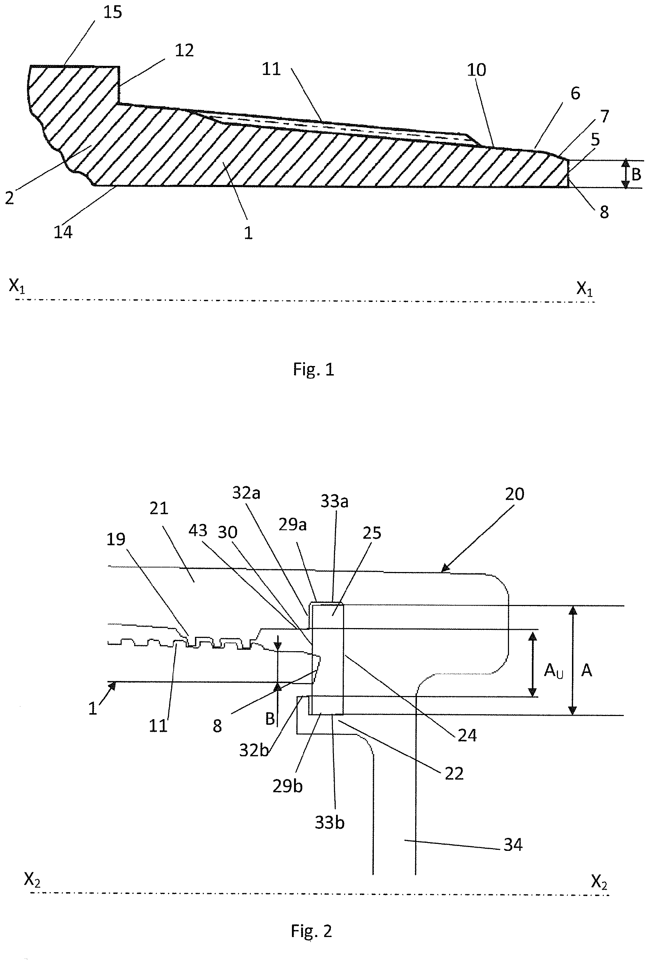

La figure 1 représente en vue de section une partie d'un composant tubulaire qui comprend un corps tubulaire (2) et au moins une connexion mâle (1). La connexion mâle est généralement réalisée par usinage sur le corps tubulaire. Le corps tubulaire comprend une paroi latérale extérieure (15) et une paroi latérale intérieure (14). La connexion mâle (1) de la figure 1 présente un axe principal X₁.

La connexion mâle (1) comprend un filetage externe (11), destiné à être vissé sur la connexion femelle d'un autre composant tubulaire par le filetage interne (non représenté) de la connexion femelle correspondante. La connexion mâle (1) comprend également sur une surface latérale externe de connexion (10), une surface annulaire extérieure (12), une surface annulaire intérieure (5), une surface d'étanchéité (6) et une paroi latérale intérieure (14).

La connexion mâle (1) du composant se termine par une surface annulaire distale (5), d'orientation sensiblement transversale. Cette surface annulaire distale peut être simple, plane, comme représentée sur la figure 1, et alternativement elle peut être non plane, par exemple conique. Elle peut alternativement être composée de deux surfaces coniques annulaires raccordées par une arrête annulaire ou un congé de raccordement. L'une des deux surfaces coniques annulaires peut optionnellement être une surface d'étanchéité, directement reliée à une deuxième surface plane annulaire faisant liaison avec la paroi latérale interne (14).

La surface annulaire distale est plus généralement la surface reliant la paroi latérale intérieure (14) et la surface latérale externe de connexion (10). La surface d'étanchéité (6) et la surface annulaire distale peuvent être séparées par une portion de liaison (7). La surface annulaire distale peut optionnellement comprendre une surface de butée (8), qui a pour fonction d'être en appui sur une surface correspondante de la connexion femelle correspondante à l'état vissé, afin de créer une surface d'étanchéité ou de transmettre un couple. Une surface annulaire distale peut présenter une longueur axiale de quelques millimètres, par exemple de 0 à 4 mm.

La surface annulaire distale (5) d'une connexion mâle est une surface annulaire intérieure. La surface annulaire distale d'une connexion femelle est une surface annulaire extérieure.

Une surface d'extrémité distale est une surface annulaire située en aval du filetage d'une connexion. Un premier élément d'un composant est en aval d'un deuxième élément d'un composant quand le premier élément est axialement positionné plus près de l'extrémité libre du composant. Un premier élément d'un composant est en amont d'un deuxième élément d'un composant quand le premier élément est axialement positionné plus loin de l'extrémité libre du composant.

La surface annulaire distale présente une largeur radiale B. Plus précisément, notamment lorsque la surface annulaire distale n'est pas une surface simple mais la réunion de plusieurs surfaces, la largeur B est comprise comme étant la différence entre le plus petit rayon et le plus grand rayon, de la projection dans un plan perpendiculaire à l'axe X₁ des surfaces constitutives de la surface annulaire distale. Cette projection est nécessairement sous la forme d'une couronne présentant un plus petit rayon et un plus grand rayon.

La largeur B peut être définie comme la largeur de la face d'extrémité distale (8) si celle-ci est plane.

La surface annulaire extérieure (12) d'une connexion peut comprendre une surface extérieure de butée, une surface extérieure de portée (appelée aussi surface d'étanchéité) et/ou une surface de liaison entre la zone comprenant le filetage externe (11) et la paroi latérale extérieure (15) du corps tubulaire (2).

Un filetage (11) de connexion peut comprendre des filets parfaits et des filets évanouissants ou imparfaits. En effet, lorsqu'un filetage est conique, celui-ci peut être subdivisé en une sous-partie dite à filets parfaits, dont le profil est constant et sans irrégularité ou imperfection (par exemple du type bavure) et une sous-partie dite à filets évanouissants ou imparfaits, dont la hauteur est progressivement décroissante et dont le profil peut présenter des irrégularités ou imperfections de manière à ménager un jeu entre les sommets et les fonds de filets. Des filets imparfaits n'encaissent quasiment pas d'efforts de vissage dans la mesure où ils n'entrent pas en contact avec des surfaces des filets de la partie conjuguée.

Une connexion mâle (1) peut également comprendre une ou plusieurs surfaces d'étanchéité métal/métal en correspondance avec des surfaces d'étanchéité d'une connexion femelle (en aval du filetage, en amont du filetage ou entre deux parties filetées). Une connexion mâle (1) peut également comprendre deux filetages extérieurs.

La figure 2 est une vue de détail en coupe, d'un mode de réalisation de l'invention, dans un plan comprenant l'axe X₂. Un protecteur (20) selon l'invention comprend un corps principal (21) sensiblement de révolution, d'axe X₂, et au moins un joint annulaire (25). Le protecteur (20) comprend aussi une paroi (31), au moins un filetage (19) apte à engrener le filetage (11) de la connexion (1). Le protecteur (20) et la connexion (1) sont représentés à l'état assemblés sur la figure 2.

La protection étant notamment mécanique, le corps (21) doit présenter une certaine rigidité tout en étant capable d'absorber au moins partiellement les coups. Pour ce faire, le corps (21) peut par exemple être réalisé par injection d'un matériau thermoplastique dans un moule adapté. Parmi les différentes familles de matériaux thermoplastiques qui peuvent être avantageusement utilisées, on peut notamment citer les mélanges à base de polycarbonate comme le polycarbonate-polyester (PC-PBT ou PC-PET) et les polyéthylènes (PE) à haute ou ultra haute densité (PE-HD, PE-UHD).

La spécification API 5CT édition 2011 prévoit dans son annexe I des exigences pour les dispositifs de protection de filetages, notamment des valeurs minimales de résistance aux chocs axiaux et de biais (à 45°) pour trois températures (-46, +21 et +66°C).

On peut par exemple plus particulièrement choisir un PE-HD produit par la société DOW et vendu sous le nom DMBA-8904-NT7 ou produit par la société BASELL et vendu sous le nom LUPOLEN 4261 AG UV 6005, un PE-UHD produit par la société TICONA et vendu sous le nom GUR 5113, ou un PC-PBT produit par la société BAYER et vendu sous le nom MAKROBLEND S7916.

Le corps (21) peut être éventuellement partiellement (au moins) alvéolé, notamment dans ses portions épaisses, afin de mieux absorber les coups.

Le corps (21) peut également être renforcé par un renfort, par exemple une jupe métallique, pour renforcer sa rigidité ou améliorer sa résistance aux chocs.

Dans le mode de réalisation de la figure 2, le corps (21) comprend une cloison radiale (34) formant bouchon. Dans une variante non représentée, la cloison radiale (34) est munie d'ouvertures, voire même est inexistante.

Dans le mode de réalisation de la figure 2, le protecteur (20) comprend un logement annulaire (22) apte à accueillir et retenir un joint annulaire (25).

Le joint annulaire (25) est disposé dans un logement annulaire (22). Le logement annulaire est délimité par un fond de logement annulaire (24), une paroi latérale externe (29a) et une paroi latérale interne (29b). Le logement annulaire comprend une partie libre de logement annulaire qui permet l'insertion du joint annulaire dans le logement annulaire.

Les parois latérales externe (29a) et interne (29b) sont arrangées de manière à ce que le joint annulaire soit retenu dans son logement. Les parois latérales externe (29a) et interne (29b) comprennent respectivement des portions extérieures de paroi latérale externe (32a) et interne (32b). Les parois latérales externe (29a) et interne (29b) comprennent respectivement des portions intérieures de paroi latérale externe (33a) et interne (33b).

Les portions extérieures de paroi latérale externe (32a) et interne (32b) délimitent la partie libre de logement annulaire et définissent une ouverture (43). Les portions extérieures de paroi latérale externe (32a) et interne (32b) sont en regard l'une de l'autre. L'écartement entre les portions extérieures de paroi latérale externe (32a) et interne (32b) est noté A_{U}. L'ouverture (43) est de largeur A_{U}. Les largeurs sont prises radialement par rapport à un axe X₂ du protecteur. L'ouverture permet l'insertion du joint dans le logement. La largeur A_{U} est choisie de telle manière que le joint puisse être déformé élastiquement lors de son introduction dans le logement à travers l'ouverture. Cette ouverture permet aussi au joint d'être en contact avec la surface annulaire distale de la connexion lorsque le protecteur est à l'état vissé sur ladite connexion. On entend par largeur hors tout d'un objet annulaire la différence entre la distance du point le plus éloigné de l'objet annulaire par rapport au centre et le point le plus proche de l'objet annulaire par rapport au centre de l'objet annulaire, ou encore la différence entre le rayon maximal et le rayon inférieur de l'objet annulaire.

La largeur utile A_{U} de l'ouverture est plus petite que la largeur hors tout du joint annulaire A, ce qui permet la rétention du joint dans le logement annulaire. Les risques de perte intempestive du joint pendant une manipulation du protecteur sont minimisés.

Les portions extérieures de paroi latérale externe (32a) et interne (32b) entourent partiellement la face supérieure (30) du joint annulaire.

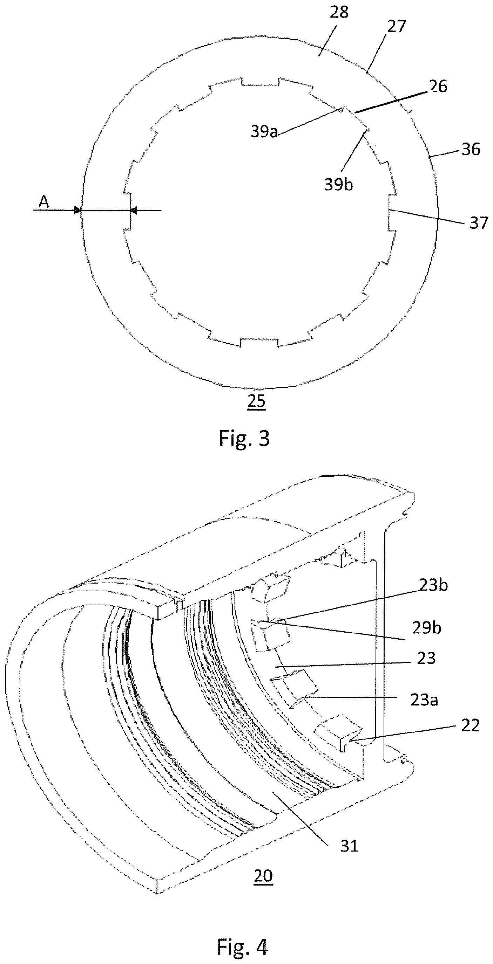

Un joint annulaire (25) vu sur la figure 3 est une couronne ou rondelle (27) de section principale sensiblement rectangulaire, et comprend une face inférieure (28), une face supérieure (30), une face externe (36) et une face interne (37).

Les parois latérales et le fond de logement épousent sensiblement la forme du joint annulaire (25) pour améliorer la retenue dudit joint. Ainsi, le joint ne vrille pas pendant le transport ou pendant le vissage du protecteur sur la connexion. Cet effet est amplifié lorsque les portions extérieures de paroi latérale externe (32a) et interne (32b) épousent partiellement la forme du joint annulaire.

Dans le mode de réalisation de la figure 2, le fond de logement annulaire est plan, ce qui permet de répartir de manière unidirectionnelle les efforts imposés sur le joint et de contribuer à éviter un vrillage du joint.

Dans une variante non représentée, le fond de logement annulaire est une portion de tore enveloppant une face inférieure (28) qui est une portion de tore en correspondance. Ceci permet d'augmenter la surface de contact entre le joint et le fond de logement.

La partie libre de logement annulaire laisse une portion de face supérieure (30) du joint annulaire libre d'être contactée par la surface d'extrémité distale (8) de la connexion (1).

La face supérieure (30) du joint annulaire est plane ou de forme légèrement conique, concave ou convexe, c'est-à-dire présenter un relief de hauteur inférieure à ¼ de la hauteur du joint annulaire, prise comme la distance moyenne séparant la face supérieure de la face inférieure du joint annulaire. Dans le cas d'une forme conique, la hauteur du relief est la différence d'épaisseur entre la face interne (37) et la face externe (39). Dans le cas d'une forme convexe ou concave, il s'agit de la différence de la distance d'un point haut et d'un point bas à la face inférieure (28).

Le joint annulaire (25) n'est pas de section circulaire.

Le joint annulaire (25) présente une largeur hors tout (A) plus grande que la largeur (B) de la surface d'extrémité distale de la connexion (1).

En particulier, le joint annulaire (25) présente une surface utile qui est la partie de la face supérieure (30) laissée libre par l'ouverture du logement annulaire. Cette surface utile est de largeur utile A_{U}, c'est-à-dire la largeur de l'ouverture (43), plus petite que la largeur hors tout (A). Ceci permet de minimiser les risques de perte intempestive du joint pendant une manipulation du protecteur.

Combiné à une structure de logement annulaire (22) comprenant deux parois latérales externe (29a) et interne (29b) distantes l'une de l'autre et dans lequel est disposé un joint annulaire (25) et chaque paroi latérale comprenant une portion de fond de paroi latérale (33a ; 33b) et une portion extérieure de paroi latérale (32a, 32b), les risques de collage du joint annulaire sur la surface d'extrémité distale de la connexion sont minimisés.

La largeur utile A_{U} est plus grande que la largeur (B) de la surface d'extrémité distale (8) de la connexion (1). Ainsi, la surface de contact entre l'extrémité distale (8) et le joint annulaire est maximisée, ce qui permet d'une part d'améliorer l'étanchéité de l'assemblage, et d'autre part de pouvoir appliquer plus de couple de vissage entre le protecteur et la connexion au travers du joint, et ainsi d'améliorer la tenue au dévissage intempestif ou accidentel du protecteur.

Un avantage supplémentaire est que la surface d'extrémité distale (8) n'est pas directement en contact avec le corps du protecteur, évitant ainsi des contacts de natures différentes entre le protecteur et la surface d'extrémité distale (8) du protecteur. En effet, la surface d'extrémité distale n'est pas en contact direct avec le logement du protecteur ou en contact avec le corps du protecteur.

Le joint d'étanchéité est réalisé dans un matériau souple, c'est-à-dire déformable, et élastique, c'est-à-dire pouvant reprendre sensiblement sa forme initiale. Le joint annulaire (25) est réalisé en un matériau élastomère. Le comportement visco-élastique de l'élastomère induit un comportement du coefficient de frottement très différent par rapport à un solide à fort module élastique tel que pour un acier ou un plastique. La grande souplesse des élastomères leur permet d'épouser les reliefs de la surface antagoniste. La demanderesse s'est rendue compte qu'il n'est pas souhaitable que la surface d'extrémité distale soit en contact hétérogène avec deux matériaux, un matériau visco-élastique et un matériau non visco-élastique, aux comportements très différents, notamment du point de vue des frottements.

Ledit matériau peut offrir une élongation à la rupture supérieure à 200%. Pour ce faire, il peut par exemple être réalisé par injection dans un matériau souple résistant à la corrosion, aux attaques chimiques, notamment des solvants industriels et des acides, et à l'exposition prolongée aux rayonnements UV, avec conservation des propriétés mécaniques. Parmi les différentes familles de matériaux qui peuvent être avantageusement utilisées, on peut notamment citer les élastomères néoprènes tel que le Baypren 210 fabriqué par LANXESS, les EPDM (éthylène-propylène) tel que Nordel de du Pont ou IP Hydrocarbon Rubber fabriqué par DOW ou Vistalon Esso-Chimie, les nitriles, ou l'un de ces matériaux disposé dans une matrice polyoléfine. Le joint d'étanchéité (40) peut être constitué par ledit matériau.

Le couple de vissage du protecteur sur la connexion est composé de composantes de couple principalement exercées par le filetage de la connexion sur le protecteur et par des surfaces de la connexion sur des surfaces d'étanchéité du protecteur.

La composante du couple de vissage du protecteur sur la connexion obtenue au niveau du joint annulaire est due à la force de contact et au facteur de frottement entre la surface annulaire distale et le joint annulaire et également au facteur de frottement entre le joint annulaire et le logement annulaire du protecteur.

La figure 3 représente un joint annulaire (25) d'un mode de réalisation de l'invention qui comprend une couronne (27) et au moins une encoche (26) pratiquée dans la couronne (27), apte à coopérer avec un décrochement (23) pratiqué dans le logement annulaire (22) de la figure 4. Ceci permet de bloquer la rotation du joint annulaire dans son logement, et d'obtenir un couple de vissage du protecteur sur la connexion au niveau du joint annulaire qui est dû à la force de contact entre l'encoche. Ceci réduit la dépendance de la composante du couple de vissage du protecteur sur la connexion vis-à-vis du facteur de frottement du joint annulaire sur le logement. Ceci permet donc de réduire les risques de dévissage accidentel.

Dans une variante de réalisation, le joint annulaire comprend une pluralité d'encoches (26) aptes à coopérer avec une pluralité de décrochements (23) pratiqués dans le logement annulaire (22). Ceci permet au joint annulaire de subir un couple plus important au vissage, les forces s'opposant à la rotation dudit joint annulaire se répartissant entre les différentes encoches. Ceci permet également de diminuer les risques de déchirement du joint annulaire au niveau d'une encoche.

Une encoche (26) présente un contour sensiblement en forme de U ou de V vu dans un plan radial.

Une encoche (26) comprend une première paroi d'encoche (39a), une deuxième paroi d'encoche (39b), et une surface de liaison entre les parois d'encoche correspondant sensiblement à la paroi latérale interne. Les parois d'encoche (39a, 39b) sont sensiblement planes et forment un angle à l'intersection avec la tangente à la paroi latérale interne qui est entre 30° et 135°. Ceci permet d'obtenir un engrènement de l'encoche (26) dans un décrochement (23) correspondant du logement annulaire (22) le décrochement de la paroi du protecteur de façon à empêcher la rotation dudit joint dans le logement annulaire.

Sur la figure 3, la face interne (37) de la couronne (27) comprend une pluralité d'encoches (26). Alternativement ou de façon complémentaire, une ou plusieurs encoches peuvent être réalisées sur la face externe (36) de la couronne. Alternativement encore, ou de façon complémentaire, une ou plusieurs encoches (36) peuvent être réalisées sur la face inférieure (28) de la couronne (27).

Avantageusement, pour des modes de réalisation d'un protecteur pour extrémité femelle, le protecteur est un protecteur d'extrémité femelle et comprend un joint annulaire avec une pluralité d'encoches pratiquées dans la face externe (36) de la couronne (27) et la paroi latérale externe du logement annulaire du protecteur comprend des décrochements réalisés en correspondance.

La figure 4 représente un corps de protecteur d'un mode de réalisation de l'invention, sans représentation du joint annulaire (25) pour des raisons de lisibilité de la figure. Le protecteur (20) comprend un logement annulaire (22) dans lequel sont pratiquées une pluralité de décrochements (23) apte à accueillir une pluralité d'encoches (26).

Ceci permet de bloquer en rotation le joint annulaire (25) dans le logement annulaire (22) et par là-même de bloquer en rotation le joint annulaire (25) par rapport au corps du protecteur. Ainsi, le couple appliqué lors du vissage de la connexion (1) par la surface d'extrémité distale (8) est transmis au protecteur par l'intermédiaire du joint annulaire. Le joint annulaire permet de bloquer à l'état vissé le protecteur sur la connexion et de diminuer les chances de dévissage accidentel du protecteur.

Dans le mode de réalisation de la figure 4, le logement annulaire comprend une pluralité de décrochements (23) pratiqués sur la paroi latérale interne (29b) du logement annulaire (22) en correspondance avec la pluralité d'encoches (26) pratiquées dans la face interne (37) de la couronne (27) du joint annulaire (25).

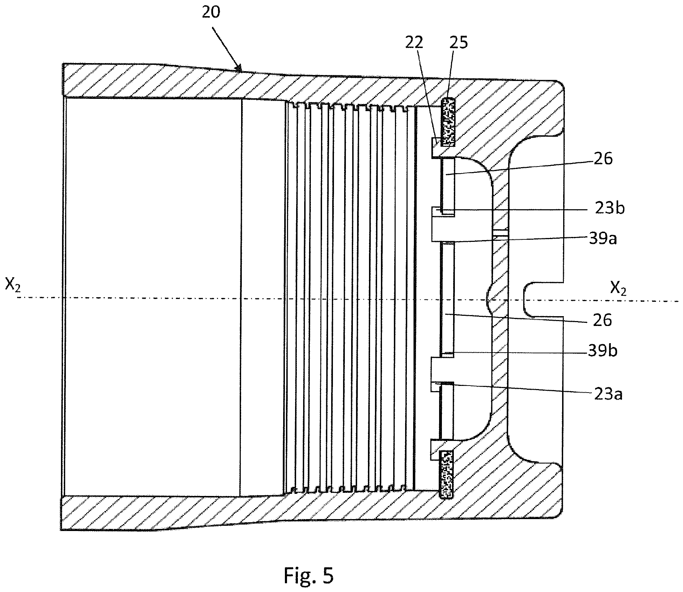

Sur la figure 5, la figure les parois d'encoche (39a ; 39b) s'appuient sur les parois de décrochements (23a, 23b) du logement annulaire. Le joint annulaire engrène ainsi le logement annulaire. Ceci permet de répartir et d'augmenter les forces de résistance au couple appliqué par la connexion sur le protecteur (20) au travers de la surface d'extrémité distale (8) de ladite connexion (1).

Un léger jeu entre les parois d'encoche et parois de décrochement peut être prévu pour faciliter le montage et pour compenser des changements dimensionnels dus à la dilatation des éléments du protecteur en fonction de la température.

Dans une variante non représentée, le logement annulaire comprend au moins un évidement pratiqué dans le fond de logement annulaire. Cet évidement permet un accès par la face inférieure au joint annulaire, rendant ainsi plus aisée son extraction du logement annulaire, par exemple pour une opération de remplacement du joint, sans préjudice à la qualité d'étanchéité fournie par le joint sur la surface d'extrémité distale de la connexion.

La localisation du joint et son montage sur le protecteur permettent d'éviter que d'autres parties de la connexion ne viennent en contact avec le joint, en particulier des éléments du filetage, et ainsi d'éviter une détérioration du joint par ledit filetage.

Dans un mode de réalisation, le joint annulaire (25) est situé à l'intérieur de l'espace définit par le logement annulaire (22).

Un logement annulaire (22) accueillant un joint annulaire (25) permet de restreindre la quantité de matière élastomère utilisée pour le joint.
Le joint annulaire (25) n'est pas en contact avec le filetage (11) du protecteur à l'état monté ou au cours du vissage, ce qui permet d'éviter toute dégradation dudit joint par les arrêtes saillantes du filetage.

La géométrie des parois latérales externe (29a) et interne (29b) permettent de grandement diminuer les risques de perte intempestive du joint, en particulier lorsque le protecteur n'est pas vissé sur la connexion à protéger.

## Revendications

1. Protecteur (20) de connexion filetée (1) de composant tubulaire pour le forage ou l'exploitation de puits d'hydrocarbures munie d'une surface d'extrémité distale (5), le protecteur comprenant un corps principal (21), un logement annulaire (22) comprenant un fond (24), deux parois latérales externe (29a) et interne (29b) distantes l'une de l'autre et dans lequel est disposé un premier joint annulaire (25), chaque paroi latérale comprenant une portion de fond de paroi latérale (33a ; 33b) et une portion extérieure de paroi latérale (32a, 32b) et une face supérieure (30), les deux portions extérieures (32a, 32b) de parois latérales définissant une ouverture (43) de largeur Aᵤ et un écartement A entre deux portions de fond de paroi latérale (33a ; 33b) est supérieur à la largeur Aᵤ, de façon à permettre la mise en place du premier joint annulaire (25) en matériau élastomère puis la rétention dudit joint annulaire (25) dans le logement annulaire (22), **caractérisé en ce que** le joint annulaire (25) comprend une pluralité d'encoches (26) réparties sur la circonférence dudit joint annulaire (25) et que le logement annulaire comprend une pluralité de décrochements (23) aptes à coopérer avec lesdites encoches (26) de sorte que des parois des encoches (39a;
39b) s'appuient sur des parois des décrochements (23a, 23b) du logement annulaire (22) formant un engrènement du joint annulaire (25) avec le logement annulaire (22).

2. Protecteur selon la revendication précédente **caractérisé en ce que** la surface d'extrémité distale (5) a une largeur B et que la largeur Aᵤ est supérieure à la largeur B, de telle manière que, le protecteur étant apte à être vissé sur ladite connexion filetée, à l'état vissé sur ladite connexion filetée, la surface annulaire d'extrémité de la connexion est en contact uniquement avec le premier joint annulaire (25)

3. Protecteur selon la revendication 1 ou 2 **caractérisé en ce que** le joint annulaire comprend une face interne (37), une face externe (38) et une face inférieure (28) et que au moins une encoche (26) est sur la face interne (37) ou sur la face externe (38) ou sur la face inférieure (28).

4. Protecteur selon une des revendications précédentes **caractérisé en ce qu'** au moins une encoche a un contour en forme de V ou de U.

5. Protecteur selon une des revendications précédentes **caractérisé en ce que** le joint annulaire comprend une face supérieure (30) sensiblement plane ou conique ou concave ou convexe et a un relief de hauteur inférieure à ¼ d'une hauteur moyenne du joint annulaire.

6. Protecteur selon les revendications précédentes **caractérisé en ce que** le protecteur comprend un deuxième dispositif d'étanchéité destiné à faire étanchéité avec une paroi latérale extérieure (12) du composant.

7. Protecteur selon la revendication 3 **caractérisé en ce que** le fond (24) est de forme plane ou une portion de tore enveloppant la face inférieure (28).

8. Protecteur selon les revendications précédentes **caractérisé en ce que** le fond (24) comprend au moins un évidement.

9. Protecteur selon les revendications précédentes **caractérisé en ce que** le joint annulaire est en matière élastomère de dureté comprise entre 30 et 60 shore A.

10. Composant de joint fileté tubulaire pour le forage ou l'exploitation de puits d'hydrocarbures, comprenant une connexion munie d'au moins un filetage et comprenant une surface annulaire d'extrémité (8), ledit composant étant équipé d'un protecteur selon l'une quelconque des revendications précédentes vissé sur ledit filetage dudit composant tubulaire.

11. Composant selon la revendication précédente **caractérisé en ce que** la surface annulaire d'extrémité est en contact uniquement avec le joint annulaire (25).

## Patentansprüche

1. Schutz (20) für einen Gewindeverbinder (1) einer rohrförmigen Komponente für das Bohren oder das Nutzen von Kohlenwasserstoffbohrlöchern, der über eine distale Endoberfläche (5) verfügt, wobei der Schutz Folgendes beinhaltet: einen Grundkörper (21), eine ringförmige Aufnahme (22), die einen Boden (24) und zwei Seitenwände, eine äußere (29a) und eine innere (29b), die voneinander beabstandet sind, beinhaltet und in der eine erste Ringdichtung (25) angeordnet ist, wobei jede Seitenwand einen Seitenwandbodenabschnitt (33a; 33b) und einen Seitenwandaußenabschnitt (32a, 32b) und eine obere Fläche (30) beinhaltet, wobei die zwei Seitenwandaußenabschnitte (32a, 32b) eine Öffnung (43) mit einer Breite Aᵤ definieren und ein Abstand A zwischen zwei Seitenwandbodenabschnitten (33a; 33b) größer als die Breite Aᵤ ist, um das Einsetzen der ersten Ringdichtung (25) aus einem Elastomerwerkstoff und das anschließende Halten der Ringdichtung (25) in der ringförmigen Aufnahme (22) zu gestatten, **dadurch gekennzeichnet, dass** die Ringdichtung (25) eine Vielzahl von Einkerbungen (26) beinhaltet, die über den Umfang der Ringdichtung (25) verteilt sind, und dass die ringförmige Aufnahme eine Vielzahl von Absätzen (23) beinhaltet, die dazu fähig sind, mit den Einkerbungen (26) zusammenzuwirken, sodass sich Wände der Einkerbungen (39a; 39b) an Wänden der Absätze (23a, 23b) der ringförmigen Aufnahme (22) abstützen und einen Eingriff der Ringdichtung (25) mit der ringförmigen Aufnahme (22) bilden.

2. Schutz nach dem vorhergehenden Anspruch, **dadurch gekennzeichnet, dass** die distale Endoberfläche (5) eine Breite B aufweist und dass die Breite Aᵤ größer als die Breite B ist, sodass, da der Schutz dazu fähig ist, auf den Gewindeverbinder geschraubt zu werden, im aufgeschraubten Zustand auf den Gewindeverbinder die ringförmige Endoberfläche des Verbinders nur mit der ersten Ringdichtung (25) in Kontakt ist.

3. Schutz nach Anspruch 1 oder 2, **dadurch gekennzeichnet, dass** die Ringdichtung eine Innenfläche (37), eine Außenfläche (38) und eine untere Fläche (28) beinhaltet und dass sich mindestens eine Einkerbung (26) an der Innenfläche (37) oder an der Außenfläche (38) oder an der unteren Fläche (28) befindet.

4. Schutz nach einem der vorhergehenden Ansprüche, **dadurch gekennzeichnet, dass** mindestens eine Einkerbung eine V- oder U-förmige Kontur aufweist.

5. Schutz nach einem der vorhergehenden Ansprüche, **dadurch gekennzeichnet, dass** die Ringdichtung eine obere Fläche (30) beinhaltet, die im Wesentlichen eben oder konisch oder konkav oder konvex ist, und ein Höhenrelief aufweist, das kleiner als ¼ einer mittleren Höhe der Ringdichtung ist.

6. Schutz nach den vorhergehenden Ansprüchen, **dadurch gekennzeichnet, dass** der Schutz eine zweite Dichtungsvorrichtung beinhaltet, die dazu bestimmt ist, eine Dichtheit mit einer Außenseitenwand (12) der Komponente herzustellen.

7. Schutz nach Anspruch 3, **dadurch gekennzeichnet, dass** der Boden (24) eben ist oder ein Torusabschnitt ist, der die untere Fläche (28) umgibt.

8. Schutz nach den vorhergehenden Ansprüchen, **dadurch gekennzeichnet, dass** der Boden (24) mindestens eine Aussparung beinhaltet.

9. Schutz nach den vorhergehenden Ansprüchen, **dadurch gekennzeichnet, dass** die Ringdichtung aus einem Elastomerwerkstoff mit einer Härte zwischen 30 und 60 Shore A besteht.

10. Rohrförmige Gewindeverbindungskomponente für das Bohren oder Nutzen von Kohlenwasserstoffbohrlöchern, beinhaltend einen Verbinder, der über mindestens ein Gewinde verfügt und eine ringförmige Endoberfläche (8) beinhaltet, wobei die Komponente mit einem Schutz nach einem der vorhergehenden Ansprüche ausgerüstet ist, der auf das Gewinde der rohrförmigen Komponente geschraubt ist.

11. Komponente nach dem vorhergehenden Anspruch, **dadurch gekennzeichnet, dass** die ringförmige Endoberfläche nur mit der Ringdichtung (25) in Kontakt ist.

## Claims

1. Protector (20) for a threaded connection (1) for a tubular component for drilling or operating hydrocarbon wells, provided with a distal end surface (5), the protector comprising a principal body (21), an annular housing (22) which comprises a bottom (24), an outer lateral wall (29a) and an inner lateral wall (29b) that are separated from one another, and in which a first annular gasket (25) is disposed, each lateral wall comprising a lateral-wall bottom portion (33a; 33b) and a lateral-wall exterior portion (32a, 32b) and an upper face (30), the two lateral-wall exterior portions (32a, 32b) defining an opening (43) of width Aᵤ and a distance A between two lateral-wall bottom portions (33a; 33b) is greater than the width Aᵤ, so as to allow the first annular gasket (25) made of elastomer material to be inserted and then for said annular gasket (25) to be retained in the annular housing (22), **characterized in that** the annular gasket (25) comprises a plurality of notches (26) distributed over the circumference of said annular gasket (25) and **in that** the annular housing comprises a plurality of set-backs (23) that are able to cooperate with said notches (26) such that walls of the notches (39a; 39b) bear on walls of the set-backs (23a, 23b) of the annular housing (22), such that the annular gasket (25) interlocks with the annular housing (22).

2. Protector according to the preceding claim, **characterized in that** the distal end surface (5) has a width B and **in that** the width Aᵤ is greater than the width B, such that, with the protector being able to be screwed onto said threaded connection, in the state screwed onto said threaded connection, the annular end surface of the connection is in contact with the first annular gasket (25) only.

3. Protector according to Claim 1 or 2, **characterized in that** the annular gasket comprises an inner face (37), an outer face (38) and a lower face (28) and **in that** at least one notch (26) is on the inner face (37) or on the outer face (38) or on the lower face (28) .

4. Protector according to one of the preceding claims, **characterized in that** at least one notch has a V-shaped or U-shaped contour.

5. Protector according to one of the preceding claims, **characterized in that** the annular gasket comprises a substantially planar or conical or concave or convex upper face (30) and has a relief with a height less than ¼ of a mean height of the annular gasket.

6. Protector according to the preceding claims, **characterized in that** the protector comprises a second sealing device intended to make a seal with an exterior lateral wall (12) of the component.

7. Protector according to Claim 3, **characterized in that** the bottom (24) has a planar shape or is in the form of a portion of a toroid enveloping the lower face (28).

8. Protector according to the preceding claims, **characterized in that** the bottom (24) comprises at least one cutout.

9. Protector according to the preceding claims, **characterized in that** the annular gasket is formed from an elastomeric material with a hardness of between 30 and 60 Shore A.

10. Tubular threaded gasket component for drilling or operating hydrocarbon wells, comprising a connection provided with at least one thread and comprising an annular end surface (8), said component being equipped with a protector according to any one of the preceding claims screwed onto said thread of said tubular component.

11. Component according to the preceding claim, **characterized in that** the annular end surface is in contact with the annular gasket (25) only.
